# EUROPEAN PATENT APPLICATION

(11) **EP 4 675 931 A1**
(43) Date of publication of application: **07.01.2026**
(21) Application number: 24785170.2
(22) Date of filing: 02.04.2024
(51) Int. Cl.: H04B 1/04, H04B 1/40, H04B 17/12, H01P 1/203, H01P 5/04

(54) **METHOD AND APPARATUS FOR SUPPORTING OPTIMIZATION OF OUTPUT POWER IN COMMUNICATION SYSTEM**

(30) Priority: 03.04.2023 KR 20230043705
(71) Applicant: Samsung Electronics Co., Ltd., Suwon-si, Gyeonggi-do 16677 (KR)
(72) Inventor: KIM, Dongki, Suwon-si Gyeonggi-do 16677 (KR); LEE, Chaejun, Suwon-si Gyeonggi-do 16677 (KR); KIM, Seongkyun, Suwon-si Gyeonggi-do 16677 (KR); KIM, Jungsik, Suwon-si Gyeonggi-do 16677 (KR); NAM, Hyohyun, Suwon-si Gyeonggi-do 16677 (KR); LEE, Daeyoung, Suwon-si Gyeonggi-do 16677 (KR)
(74) Representative: Nederlandsch Octrooibureau
(86) International application number: PCT/KR2024/004253
(87) International publication number: WO 2024/210465

(57) **Abstract**

The present disclosure relates to a 5G or 6G communication system for supporting a higher data transmission rate than a 4G communication system such as LTE. An electronic device in a wireless communication system, according to the present disclosure, comprises an RF transmitter and a control unit, wherein the RF transmitter comprises: a power amplifier that amplifies power of a signal; an antenna that transmits the signal; and an output power adaptive optimizer disposed between the power amplifier and the antenna to adjust antenna input impedance, and the control unit may optimize output power of the power amplifier by adjusting the antenna input impedance by using the output power adaptive optimizer.

## Description

### [Technical Field]

The disclosure relates to a method and device for supporting optimization of output power in a communication system.

### [Background Art]

Considering the development of wireless communication from generation to generation, the technologies have been developed mainly for services targeting humans, such as voice calls, multimedia services, and data services. Following the commercialization of 5G (5th-generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th-generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bps and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, radio frequency (RF) elements, antennas, novel waveforms having a better coverage than orthogonal frequency division multiplexing (OFDM), beamforming and massive multiple input multiple output (MIMO), full dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, high-altitude platform stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of artificial intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as mobile edge computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive extended reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

### [Detailed Description of the Invention]

### [Technical Problem]

The disclosure relates to a method and device for supporting optimization of output power by adjusting antenna input impedance in a communication system.

### [Technical Solution]

According to an embodiment of the disclosure, an electronic device in a wireless communication system may comprise a radio frequency (RF) transmitter and a control unit. The RF transmitter may include a power amplifier amplifying power of a signal, an antenna transmitting the signal, and an output power adaptive optimizer (OPAO) disposed between the power amplifier and the antenna to adjust antenna input impedance. The control unit may optimize output power of the power amplifier by adjusting the antenna input impedance using the output power adaptive optimizer.

### [Advantageous Effects]

The disclosure may support optimization of output power in a communication system by adjusting antenna input impedance.

### [Brief Description of Drawings]

FIG. 1 illustrates a schematic structure of a wireless communication system.
FIG. 2 illustrates a diagram for output power of a PA.
FIG. 3 is a graph illustrating an example of degradation phenomenon of output power of a PA according to a position of antenna impedance.
FIG. 4 illustrates a structure of an RF transmitter for preventing degradation phenomenon of PA output power.
FIG. 5 illustrates a structure of an antenna in package (AiP) module.
FIG. 6 illustrates a structure of an RF transmitter according to an embodiment of the disclosure.
FIG. 7 illustrates a structure of an OPAO according to an embodiment of the disclosure.
FIG. 8A is a view illustrating results of adjusting antenna impedance using the OPAO structure of FIG. 7.
FIG. 8B is a view illustrating phase shift in an OPAO according to an embodiment of the disclosure.
FIG. 8C illustrates an example of configuration of stubs of an OPAO according to an embodiment of the disclosure.
FIG. 9 illustrates a structure of an OPAO according to an embodiment of the disclosure.
FIG. 10 illustrates a structure of an OPAO according to an embodiment of the disclosure.
FIG. 11 illustrates a structure of an OPAO according to an embodiment of the disclosure.
FIG. 12 illustrates an initial calibration process of an RF transmitter according to an embodiment of the disclosure.
FIG. 13 illustrates a flowchart of an initial calibration process according to an embodiment of the disclosure.
FIG. 14 illustrates an initial calibration process of an RF transmitter according to an embodiment of the disclosure.
FIG. 15 illustrates a flowchart of a calibration process for each beam according to an embodiment of the disclosure.
FIG. 16 illustrates a real-time calibration process of an RF transmitter according to an embodiment of the disclosure.
FIG. 17 illustrates a flowchart of a real-time calibration process according to an embodiment of the disclosure.
FIG. 18 illustrates a look-up table for an OPAO according to an embodiment of the disclosure.
FIG. 19 illustrates changes in antenna impedance points according to OPAO application according to an embodiment of the disclosure.
FIG. 20 is a view illustrating a configuration example of an electronic device according to an embodiment of the disclosure.

### [Mode for Carrying out the Invention]

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification. When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

For ease of description, some of the terms or names defined in the 3rd generation partnership project (3GPP) standards (standards for 5G, new radio (NR), long-term evolution (LTE), or similar systems) may be used. However, the disclosure is not limited by such terms and names and may be likewise applicable to systems conforming to other standards. Further, the disclosure is not limited to the terms used in the following embodiments, and the terms may be replaced with other terms denoting objects with equivalent technical meanings.

The disclosure relates to a method and device for supporting optimization of output power in a communication system.

The disclosure relates to a method and device for supporting optimization of output power by adjusting antenna input impedance in a communication system.

The disclosure relates to a method and device for increasing power efficiency and/or radiation efficiency of an RF transceiver of a wireless communication system.

The disclosure provides a method for enhancing output power of a phased array radio-frequency integrated circuit (RFIC) and antenna radiation efficiency by applying a proposed structure between a PA and an antenna to enhance output power in a high frequency band such as a sub THz band.

The disclosure may insert a structure capable of tuning (or adjusting) antenna input impedance of a signal between each antenna and PA so that impedances of antenna input signals of all ports are positioned close to an optimal output point of a power amplifier. Accordingly, the phased array RFIC may generate optimal output. This may basically compensate for PA performance in a high frequency band (e.g., sub THz band) where degradation characteristics of output power of the PA exist, while simultaneously increasing power and antenna radiation efficiency.

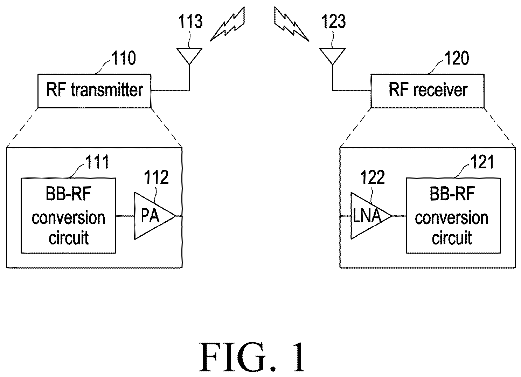

FIG. 1 illustrates a schematic structure of a wireless communication system.

Referring to FIG. 1, a wireless communication system may include an RF transmitter 110 and an RF receiver 120. As illustrated, in the wireless communication system, data (or a signal) may be transmitted (or radiated) through the RF transmitter 110 and may be received through the RF receiver 120. In the disclosure, an RF transmitter may be abbreviated as a transmitter, and an RF receiver may be abbreviated as a receiver.

In case of uplink communication, the RF transmitter 110 corresponds to a transmitter of a user equipment (UE), and the RF receiver 120 corresponds to a receiver of a base station. Alternatively, in case of downlink communication, the RF transmitter 110 corresponds to a transmitter of a base station, and the RF receiver 120 corresponds to a receiver of a UE. In the disclosure, a UE may be a user device capable of performing communication functions. For example, the user equipment (UE) may include a terminal, a mobile station (MS), a wireless transmit/receive unit (WTRU), a cellular phone, a smartphone, a machine type communication (MTC) device, a computer, a wireless sensor, a vehicle, an IoT device, and/or other electronic devices capable of performing communication functions. The UE may communicate with another UE or communicate with one or more network nodes in a wireless access network. In the disclosure, a base station is an entity performing resource allocation of a UE, and may be a radio base station, NodeB, evolved Node B (eNodeB or eNB), next generation Node B (gNodeB or gNB), a wireless access unit, a network node, a network device, a node on a network, a base station control unit, a transmission point (TP), an access point (AP), a relay station, a base band unit (BBU), a remote radio unit (RRU), a central unit (CU), at least one distribute unit (DU) controlled/managed by the CU, a remote radio head (RRH), or a transmit/receive point (TRP).

The RF transmitter 110 may include a baseband (BB)-RF conversion circuit 111, a power amplifier (PA) 121, and/or an antenna 123, but the disclosure is not limited thereto. According to an embodiment, the RF transmitter 110 may obtain an RF signal from a BB signal through the BB-RF conversion circuit 111, amplify power of the RF signal through the PA 112, and radiate the amplified signal into the air through the antenna 113.

The RF receiver 120 may include an RF-BB conversion circuit 121, a low noise amplifier (LNA) 122, and/or an antenna 123, but the disclosure is not limited thereto. According to an embodiment, the RF receiver 120 may process a signal received through the antenna 123 through the LNA 122 and obtain a BB signal from the processed RF signal through the RF-BB conversion circuit 121.

According to an embodiment, the PA 112 may have a load impedance for outputting optimized output power according to output level and frequency. The load impedance may be an impedance looking from the PA 112 toward the antenna 113, and may be referred to as antenna impedance or antenna input impedance.

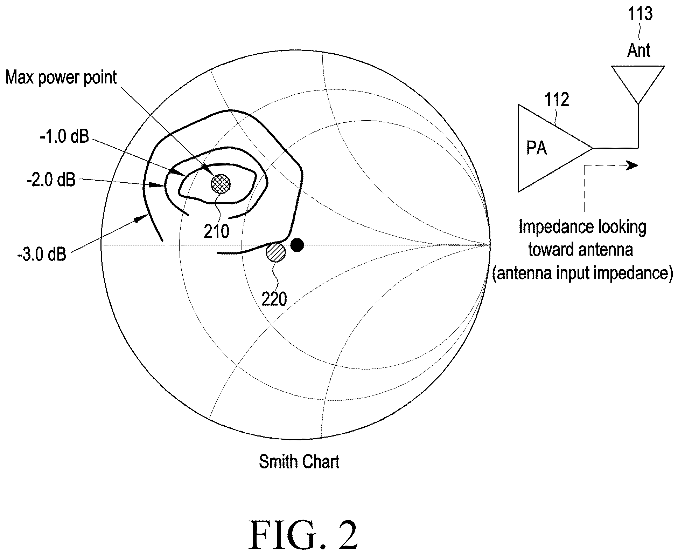

FIG. 2 illustrates a diagram for output power of a PA.

The diagram for output power of the PA in FIG. 2 may be a contour for output power of the PA.

In the embodiment of FIG. 2, a first point 210 corresponds to an optimization point which is a max power point of the PA 112, and a second point 220 corresponds to a point corresponding to antenna impedance (input antenna impedance) looking from the PA 112 toward the antenna 113. In the disclosure, a point corresponding to antenna impedance may be referred to as an antenna impedance point.

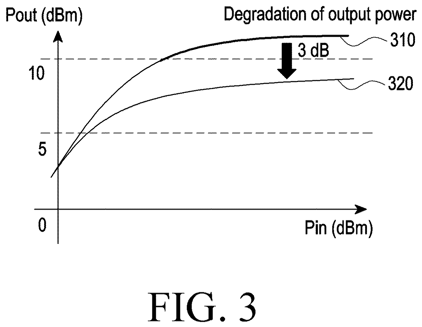

Referring to FIG. 2, as a point corresponding to antenna impedance moves away from the optimization point 210 as a center, degradation of output power of the PA 112 may occur. For example, as illustrated, output power associated with antenna impedance corresponding to the second point 220 may have output power decreased by 3dB compared to maximum output power of the first point 210. An example of degradation of output power of the PA 112 is described below with reference to FIG. 3.

FIG. 3 is a graph illustrating an example of degradation phenomenon of output power of a PA according to a position of antenna impedance.

FIG. 3 illustrates curves of PA output power (Pout) versus PA input power (Pin) at two different antenna impedance points. In the embodiment of FIG. 3, a first curve 310 may be a curve of Pout versus Pin corresponding to the first optimization point 210 of FIG. 2, and a second curve 320 may be a curve of Pout versus Pin corresponding to the second point 220 of FIG. 2.

Referring to FIG. 3, for an antenna input point far from the optimization point, it may be identified that degradation of maximum output power of the PA (e.g., 3dB reduction) occurs. For example, output power associated with antenna impedance corresponding to the second point 220 of FIG. 2 may have output power decreased by 3dB compared to maximum output power of the first point 210 of FIG. 2. As illustrated, degradation of PA output power may increase as PA input power increases.

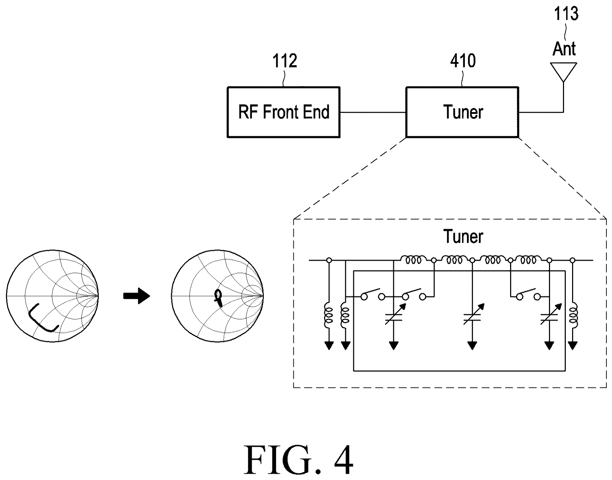

FIG. 4 illustrates a structure of an RF transmitter for preventing degradation phenomenon of PA output power.

The RF transmitter of FIG. 4 may be an RF transmitter using a low frequency band (e.g., frequency band of 3G/4G(LTE)).

Referring to FIG. 4, the RF transmitter may further include a tuner 410 for preventing output power degradation phenomenon between the PA 112 (or an RF front end including the PA 112) and the antenna 113.

The tuner 410 may be inserted between the PA 112 and the antenna 113 to tune (or adjust) antenna impedance. For example, when antenna impedance is distorted due to external environment, etc., the RF transmitter may tune a position of antenna impedance to be close to the optimization point using the tuner 410. Accordingly, enhancement of output power and antenna radiation efficiency may be enhanced.

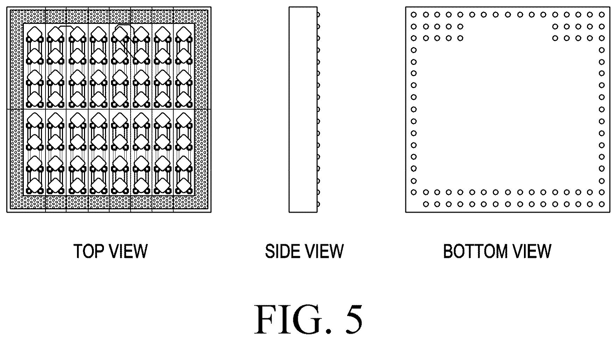

FIG. 5 illustrates a structure of an AiP module.

Referring to FIG. 5, an RF transceiver using a high frequency band (e.g., sub THz or THz frequency band of 6G) may include an antenna in package (AiP) module as illustrated in FIG. 5. The AiP module may be a module configured in the form of one module including at least one antenna, at least one RFIC, and a control circuit.

Meanwhile, in case of a high frequency band (e.g., sub THz or THz frequency band of 6G), a phenomenon occurs where saturation power (Psat) and gain characteristics of the PA are degraded. Further, when configuring an AiP module in a high frequency band, a phenomenon of output power degradation may be aggravated due to loss by load mismatch. This may be a burden on a link budget of a communication system.

Further, when using a phased array RFIC structure/module in an RF transceiver, since antenna impedances in each path appear different in the phased array RFIC, output power of each path becomes different, and additionally, antenna impedance changes for each beam during beamforming, making it difficult to generate PA optimal output in each path. Accordingly, degradation of output power of the phased array RFIC occurs.

To address these issues, compensation using an existing tuner (e.g., the tuner 410 of FIG. 4) may be considered. However, use of conventional tuners may be difficult for the following reasons. For example, when the frequency band becomes higher, as with the AiP module of FIG. 5, sizes of antennas and modules decrease, so it is difficult to integrate the size of existing tuners into RF modules of high frequency bands (e.g., sub THz band of 6G), and also, loss of passive components used in existing tuners increases, making application of existing tuners difficult.

Therefore, a new antenna impedance tuning structure for tuning antenna impedance in high frequency bands, rather than conventional tuner structures like the tuner 410 of FIG. 4, needs to be considered. This proposed new structure may be referred to as an output power adaptive optimizer (OPAO). In the disclosure, OPAO may also be referred to as an OPAO component, OPAO structure, OPAO module, or phase tuning structure. Hereinafter, with reference to each figure, a configuration of OPAO, operation of an RF transmitter including OPAO, calibration operation using OPAO, etc. are described.

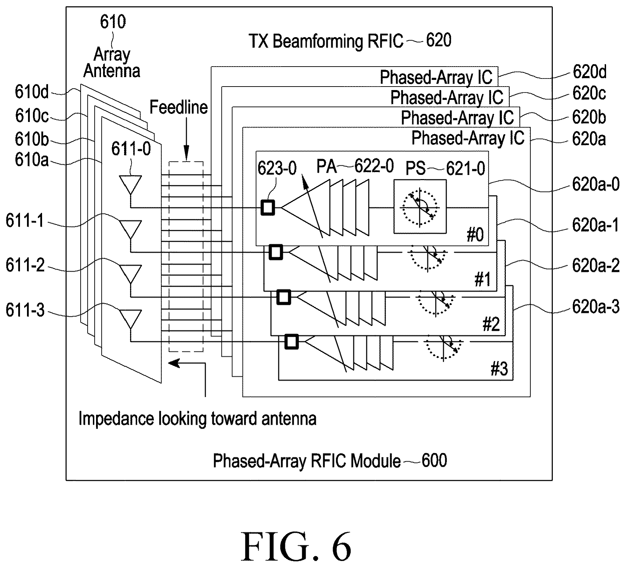

FIG. 6 illustrates a structure of an RF transmitter according to an embodiment of the disclosure.

Referring to FIG. 6, the RF transmitter may include a phased array RFIC module 600.

According to an embodiment, the phased array RFIC module 600 may include an array antenna 610 and a transmit (Tx) beamforming RFIC 620.

According to an embodiment, the array antenna 610 may include a plurality of antennas having a preset array structure.

According to an embodiment, the array antenna 610 may have a two-dimensional (2D) array structure (e.g., n x m structure). For example, the array antenna 610 may have a 4 x 4 structure as illustrated. In this case, the array antenna 610 includes four layers 610a, 610b, 610c, 610d, and each layer may include four antennas respectively. For example, the first layer 610a may include four antennas (e.g., 611-0, 611-1, 611-2, 611-3).

According to an embodiment, the transmit (Tx) beamforming RFIC 620 may include at least one phased array IC. For example, the transmit (Tx) beamforming RFIC 620 may include four phased array ICs 620a, 620b, 620c, 620d as illustrated. Each phased array IC may correspond to the corresponding layer of the array antenna respectively.

According to an embodiment, the phased array ICs 620a, 620b, 620c, 620d may include at least one part associated with the corresponding antenna. For example, as illustrated, the first phased array IC 620a may include a first part 620a-0 associated with the first antenna 611-0, a second part 620a-1 associated with the second antenna 611-1, a third part 620a-2 associated with the third antenna 611-2, and a fourth part 620a-3 associated with the fourth antenna 611-3.

Each part may be used for phase shift, power amplification and/or antenna impedance adjustment for the corresponding antenna. According to an embodiment, each part may include a phase shifter, PA, and OPAO for the associated antenna. For example, as illustrated, the first part 620a-0 of the first phased array IC 620a may include a first phase shifter 621-0, a first PA 622-0, and a first OPAO 623-0 for the first antenna 611-0.

According to an embodiment, the OPAO may be disposed between the PA and the associated antenna of the array antenna within the phased array IC. For example, the first OPAO 623-0 is included in the first phased array IC 620a and may be disposed between the first PA 622-0 and the first antenna 611-0.

According to an embodiment, the OPAO (or PA) of the phased array IC may be connected to the corresponding antenna of the array antenna through a feedline. For example, the first OPAO 623-0 of the first phased array IC 620a may be connected to the first antenna 611-0 through a first feedline.

According to an embodiment, each OPAO disposed between an antenna and a PA may adjust (or tune) antenna impedance for a signal between the corresponding antenna and the corresponding PA respectively. Through such impedance adjustment, impedances of antenna input signals of all ports may be positioned to be close to the optimal output point. Thereby, the phased array RFIC may generate optimal output.

According to an embodiment, the OPAO may be integrated in the phased array RFIC (or phased array IC).

According to an embodiment, the OPAO may include a signal line, at least one switch and at least one stub. As an embodiment, a first end of the signal line is connected to a PA port, and a second end of the signal line may be connected to a feedline (or antenna).

According to an embodiment, the at least one stub may be an open stub or a short stub. Here, an open stub corresponds to a stub where the stub is not connected to ground, and a short stub corresponds to a stub where the stub is connected to ground.

According to an embodiment, a plurality of stubs may have different lengths from each other. According to an embodiment, some stubs among the plurality of stubs may have the same length as each other, and remaining stubs may have different lengths from each other.

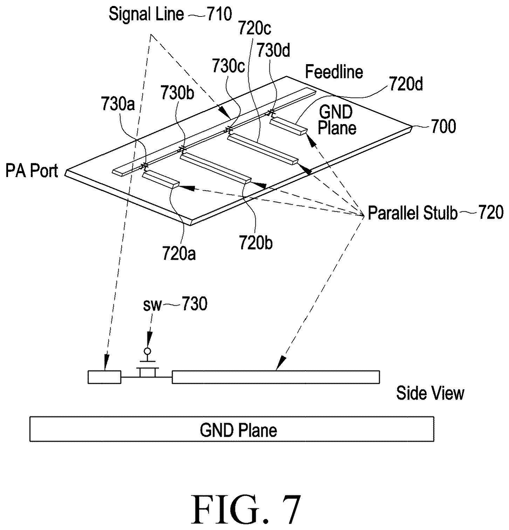

FIG. 7 illustrates a structure of an OPAO according to an embodiment of the disclosure.

The OPAO 700 of FIG. 7 may be an example of the OPAO of FIG. 6. For example, each OPAO of FIG. 6 may have the structure of the OPAO 700 of FIG. 7.

According to an embodiment, the OPAO 700 may include a signal line 710, a plurality of stubs (parallel stubs) 720 disposed in parallel to the signal line, and a plurality of switches 730. Each switch 730 may be disposed between the signal line 710 and the corresponding stub 720. For example, as illustrated in FIG. 7, the OPAO 700 may include the signal line 710, four parallel stubs 720a, 720b, 720c, 720d, and four switches 730a, 730b, 730c, 730d disposed between each parallel stub and the signal line.

According to an embodiment, each of the plurality of switches 730 is used to support parallel connection between the signal line 710 and the corresponding stub 720, and each of the plurality of stubs 720 may be connected in parallel to the signal line 730 or not connected according to on/off of the corresponding switch 730. For example, the first switch 730a is used to support parallel connection between the signal line 710 and the first stub 720a, and the first stub 720a may be connected in parallel to the signal line 730 or not connected according to on/off of the first switch 730a.

According to an embodiment, the plurality of stubs 720 may have different lengths from each other. For example, each of the first stub 720a, the second stub 720b, the third stub 720c, and the fourth stub 720d may have different lengths from each other.

According to an embodiment, the plurality of stubs 720 may be open stubs. For example, each of the first stub 720a, the second stub 720b, the third stub 720c, and the fourth stub 720d may be an open stub. The parallel stubs 720 of FIG. 7 may perform a role of shifting phase by operating as capacitors as open stubs.

According to an embodiment, the RF transmitter (or a control unit of the RF transmitter) may adjust antenna impedance by controlling whether to connect the signal line 710 and the corresponding stub 720 by controlling on/off of each switch 730 of the OPAO 700. For example, the RF transmitter (or the control unit of the RF transmitter) may adjust the antenna input impedance by adjusting the number of stubs connected in parallel to the signal line by controlling on/off of each switch 730 of the OPAO 700. The RF transmitter (or the control unit of the RF transmitter) may adjust antenna impedance to be close to the optimal output point through such OPAO control.

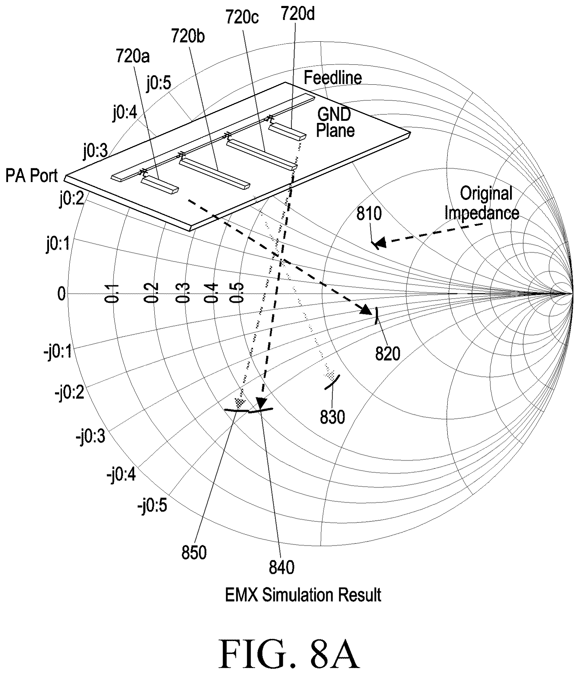

FIG. 8A is a view illustrating results of adjusting antenna impedance using the OPAO structure of FIG. 7.

Referring to FIG. 8A, a first point 810 corresponds to an original antenna impedance point, a second point 820 corresponds to an adjusted antenna impedance point when the first stub 720a is connected to the feedline (or signal line), a third point 830 corresponds to an adjusted antenna impedance point when the second stub 720b is connected to the feedline (or signal line), a fourth point 840 corresponds to an adjusted antenna impedance point when the third stub 720c is connected to the feedline (or signal line), and a fifth point 850 corresponds to an adjusted antenna impedance point when the fourth stub 720d is connected to the feedline (or signal line).

As such, antenna impedance may be adjusted by controlling connection between stubs and the feedline through control of switches. In this manner, by properly determining combinations of connections between stubs and the feedline, antenna impedance may be adjusted so that the PA of each path may produce optimal output power.

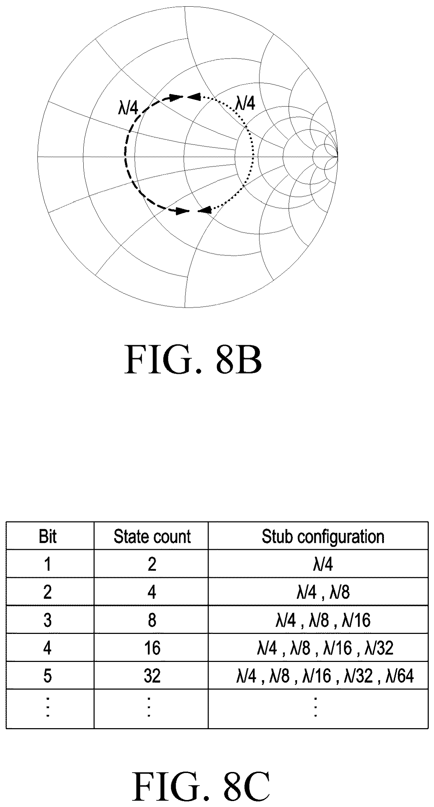

FIG. 8B is a view illustrating phase shift in an OPAO according to an embodiment of the disclosure.

Referring to FIG. 8B, the OPAO requires phase shift of maximum λ/2 on a smith chart, and it is required that lengths of stubs are configured to include lengths for changing phase of maximum λ/4. Here, λ corresponds to the length of wavelength of the operating frequency.

FIG. 8C illustrates an example of configuration of stubs of an OPAO according to an embodiment of the disclosure.

The number of switches and/or the number of stubs constituting the OPAO may have various configurations according to system specifications and/or the number of control bits.

The table of FIG. 8C illustrates an example of stub configuration according to the number of control bits. As illustrated in FIG. 8C, when the control bit is 1 bit, it may have 1 stub corresponding to λ/4 and may have 2 states. When the control bits are 2 bits, it may have 2 stubs corresponding to λ/4 and λ/8 respectively, and may have 4 states. When the control bits are 3 bits, it may have 3 stubs corresponding to λ/4, λ/8, and λ/16 respectively, and may have 8 states. When the control bits are 4 bits, it may have 4 stubs corresponding to λ/4, λ/8, λ/16, and λ/32 respectively, and may have 16 states. When the control bits are 5 bits, it may have 5 stubs corresponding to λ/4, λ/8, λ/16, λ/32, and λ/64 respectively, and may have 32 states.

According to an embodiment, the width and thickness of stubs may be set based on a basic 50 ohms at the operating frequency and are variable.

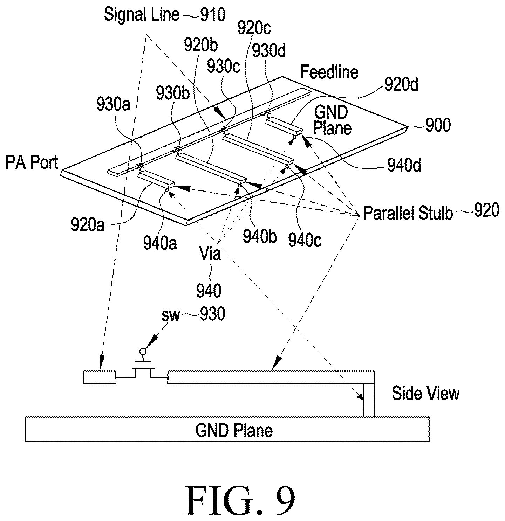

FIG. 9 illustrates a structure of an OPAO according to an embodiment of the disclosure.

The OPAO 900 of FIG. 9 may be an example of the OPAO of FIG. 6. For example, each OPAO of FIG. 6 may have the structure of the OPAO 700 of FIG. 7.

The OPAO structure of FIG. 9, unlike the OPAO structure of FIG. 7, may be configured with stubs as short stubs. The OPAO structure of FIG. 9, like the OPAO structure of FIG. 7, may have stubs disposed in parallel (parallel stub structure).

According to an embodiment, the OPAO 900 may include a signal line 910, a plurality of stubs (parallel stubs) 920 connected in parallel to the signal line, and a plurality of switches 930. Each switch 930 may be disposed between the signal line 910 and the corresponding stub 920. For example, as illustrated in FIG. 9, the OPAO 900 may include the signal line 910, four parallel stubs 920a, 920b, 920c, 920d, and four switches 930a, 930b, 930c, 930d disposed between each parallel stub 920 and the signal line 910.

According to an embodiment, each of the plurality of switches 930 is used to support parallel connection between the signal line 910 and the corresponding stub 920, and each of the plurality of stubs 920 may be connected in parallel to the signal line 930 or not connected according to on/off of the corresponding switch 930. For example, the first switch 930a is used to support parallel connection between the signal line 910 and the first stub 920a, and the first stub 920a may be connected in parallel to the signal line 930 or not connected according to on/off of the first switch 930a.

According to an embodiment, the plurality of stubs 920 may have different lengths from each other. For example, each of the first stub 920a, the second stub 920b, the third stub 920c, and the fourth stub 920d may have different lengths from each other.

According to an embodiment, the plurality of stubs 920 may be short stubs. For example, each of the first stub 920a, the second stub 920b, the third stub 920c, and the fourth stub 920d may be a short stub. As an embodiment, the stubs 920 may be connected to ground through vias 940. For example, the first stub 920a may be connected to ground through a first via 940a, the second stub 920b may be connected to ground through a second via 940b, the third stub 920c may be connected to ground through a third via 940c, and the fourth stub 920d may be connected to ground through a fourth via 940d. The parallel stubs 920 of FIG. 9 may perform a role of shifting phase by operating as inductors as short stubs.

According to an embodiment, the RF transmitter (or the control unit of the RF transmitter) may adjust antenna impedance by controlling whether to connect the signal line 910 and the corresponding stub 920 by controlling on/off of each switch of the OPAO 900. For example, the RF transmitter (or the control unit of the RF transmitter) may adjust the antenna input impedance by adjusting the number of stubs connected in parallel to the signal line by controlling on/off of each switch 930 of the OPAO 900. The RF transmitter (or the control unit of the RF transmitter) may adjust antenna impedance to be close to the optimal output point through such OPAO control.

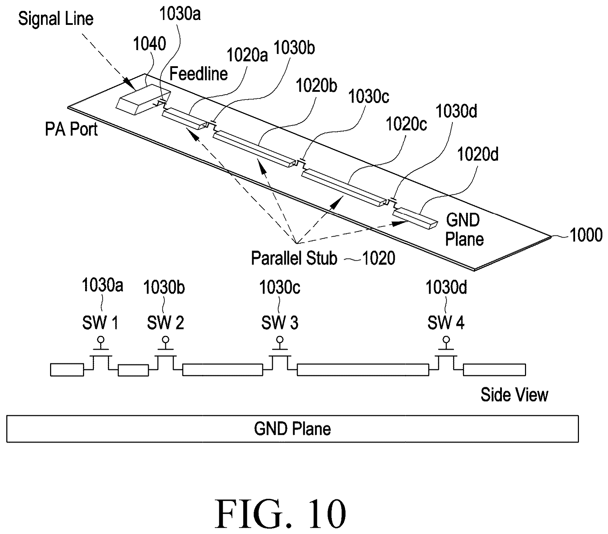

FIG. 10 illustrates a structure of an OPAO according to an embodiment of the disclosure.

The OPAO 1000 of FIG. 10 may be an example of the OPAO 623 of FIG. 6. For example, each OPAO of FIG. 6 may have the structure of the OPAO 700 of FIG. 10.

The OPAO structure of FIG. 10, unlike the OPAO structure of FIG. 9, may be configured with stubs as open stubs. The OPAO structure of FIG. 10, unlike the OPAO structure of FIGS. 7/9, may have stubs disposed in series (series stub structure).

According to an embodiment, the OPAO 1000 may include a signal line 1010, a plurality of stubs (series stubs) 1020 connected in series to the signal line, and a plurality of switches 1030. Each switch 1030 may be disposed between the signal line and a corresponding stub or between stubs. For example, as illustrated in FIG. 10, the OPAO 1010 may include the signal line 1010, four series stubs 1020a, 1020b, 1030c, 1040c, three switches SW2 1030b, SW3 1030c, SW4 1030d disposed between the series stubs 1020a, 1020b, 1030c, 1040c, and one switch SW1 1030a disposed between the first series stub 1020a and the signal line 1040.

According to an embodiment, each of the plurality of switches 1030 is used to support series connection between the signal line 1010 and the corresponding stub 1020, and each of the plurality of stubs 1020 may be connected in series to the signal line 1030 or not connected according to on/off of the corresponding switch 1030. For example, SW1 1030a is used to support series connection between the signal line 1040 and the first stub 1020a, and SW2 1030b may be used to support series connection between the first stub 720a and the second stub 1020b.

According to an embodiment, the plurality of stubs 1020 may have different lengths from each other. For example, each of the first stub 1020a, the second stub 1020b, the third stub 1020c, and the fourth stub 1020d may have different lengths from each other.

According to an embodiment, the plurality of stubs 1020 may be open stubs. For example, each of the first stub 1020a, the second stub 1020b, the third stub 1020c, and the fourth stub 1020d may be an open stub.

According to an embodiment, the RF transmitter (or the control unit of the RF transmitter) may adjust antenna impedance by shifting phase by adjusting the length of open stubs through on/off of each switch of the OPAO. For example, the RF transmitter (or the control unit of the RF transmitter) may adjust the antenna input impedance by adjusting the number of stubs connected in series to the signal line by controlling on/off of each switch 1030 of the OPAO 1000. The RF transmitter (or the control unit of the RF transmitter) may adjust antenna impedance to be close to the optimal output point through such OPAO control.

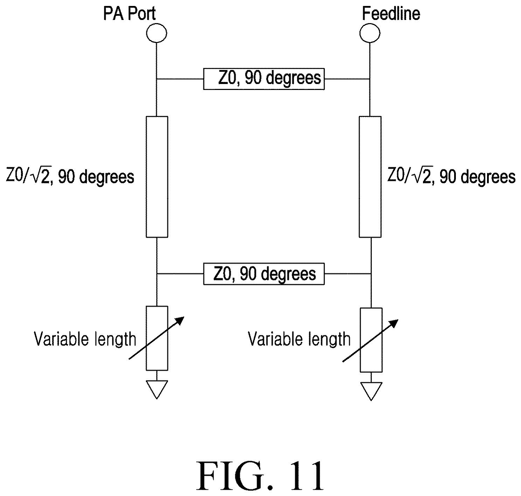

FIG. 11 illustrates a structure of an OPAO according to an embodiment of the disclosure.

The OPAO 1100 of FIG. 11 may be an example of the OPAO 623 of FIG. 6.

FIG. 11 corresponds to an embodiment performing phase tuning using a signal line having variable length, unlike the embodiments of FIGS. 7, 9 and 10 using stubs.

Referring to FIG. 11, as illustrated, the OPAO 1100 may have a structure with variable length inserted in a state in which an input port and an isolated port of a hybrid coupler are connected to a PA and an antenna respectively. Antenna impedance may be optimized through such a structure having variable length.

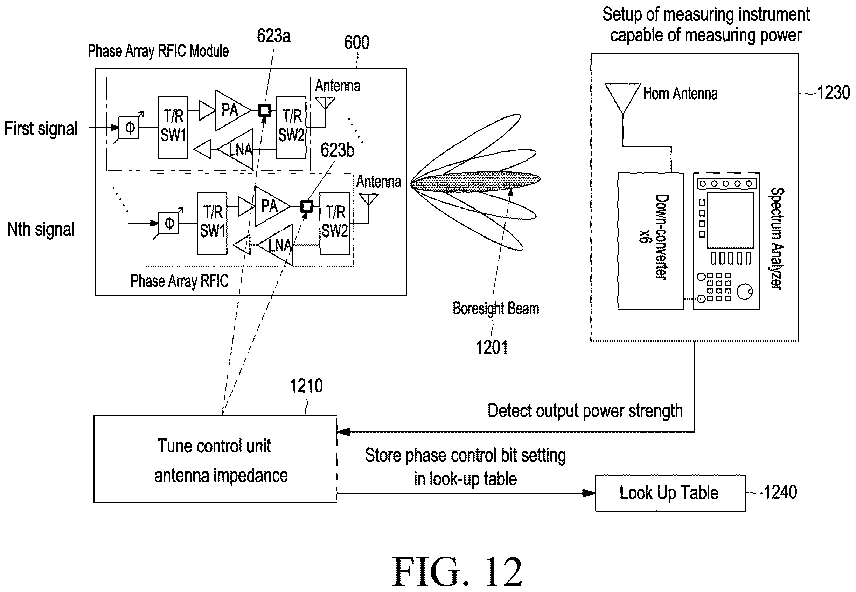

FIG. 12 illustrates an initial calibration process of an RF transmitter according to an embodiment of the disclosure.

The embodiment of FIG. 12 may be an example of an initial calibration process using a beam in boresight direction (boresight beam 1201).

Referring to FIG. 12, the RF transmitter (or a control unit 1210 of the RF transmitter) may apply a signal to each path of the phased array RFIC module 600 and identify output power radiated through the antenna for each state through a measuring instrument 1230.

The RF transmitter (or the control unit 1210) may discover a state having output above a preset reference (e.g., sum of PA Psat power and antenna gain) while tuning (or adjusting) antenna impedance for a signal between the antenna and PA of each path using the OPAOs 623a to 623n; 623, and store the corresponding state in a look-up table 1240 (e.g., store phase control bit settings corresponding to the corresponding state in the look-up table). Accordingly, calibration for discovering initial optimal output power of the phased array RFIC module 600 may be performed.

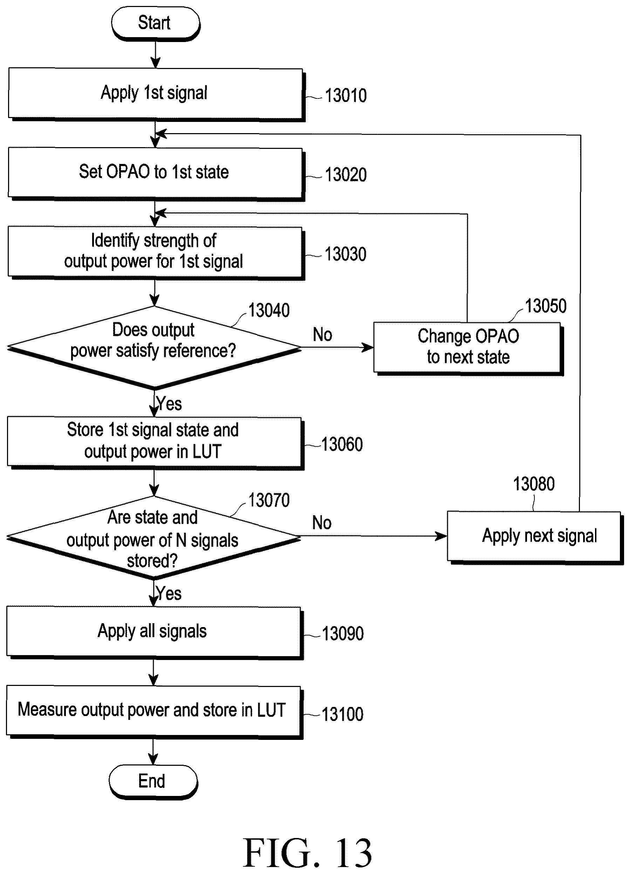

FIG. 13 illustrates a flowchart of an initial calibration process according to an embodiment of the disclosure.

The initial calibration process of FIG. 13 may be an example of the initial calibration process of FIG. 12. In the embodiment of FIG. 13, it is assumed that N signals are applied to N paths.

Referring to FIG. 13, the RF transmitter (or control unit) may apply a first signal for a first path (13010).

The RF transmitter (or control unit) may set a state of the OPAO for the first signal to a first state (13020).

The RF transmitter (or control unit) may identify strength of output power for the first signal (13030).

The RF transmitter (or control unit) may determine whether the output power satisfies a preset reference (13040).

When the output power does not satisfy the preset reference, the RF transmitter (or control unit) may set the state of the OPAO for the first signal to a next state (second state) of the first state (13050). In this case, operations 13030 to 13040 may be performed again based on the second state.

When the output power satisfies the preset reference, the RF transmitter (or control unit) may store the first state and output power for the first signal in the first state in a look-up table (LUT) (13060).

The RF transmitter (or control unit) may determine whether states of N signals and output power of corresponding signals in corresponding states have been stored in the look-up table (13070). In other words, it may be determined whether states and output power of signals for all paths have been stored in the look-up table.

When states of N signals and output power of corresponding signals in corresponding states have not been stored in the look-up table, the RF transmitter (or control unit) may apply a next signal (e.g., a second signal for a second path) to the corresponding path (e.g., the second path) (13080). In this case, the RF transmitter (or control unit) may perform operations 13020 to 13070 for the corresponding signal. Through repetition of this process, operations 13020 to 13070 for each signal for each path may be performed respectively. For example, the RF transmitter (or control unit) may perform operations 13010 to 13060 for second to Nth signals applied to second to Nth paths respectively. As described above, each operation for each path may be performed sequentially, but the disclosure is not limited thereto. For example, each operation for each path may be performed simultaneously in parallel.

When states of N signals and output power of corresponding signals in corresponding states have been stored in the look-up table, the RF transmitter (or control unit) may apply all signals (13090).

The RF transmitter (or control unit) may measure beam output power for a boresight beam based on all applied signals and store the measured beam output power in the look-up table (13100).

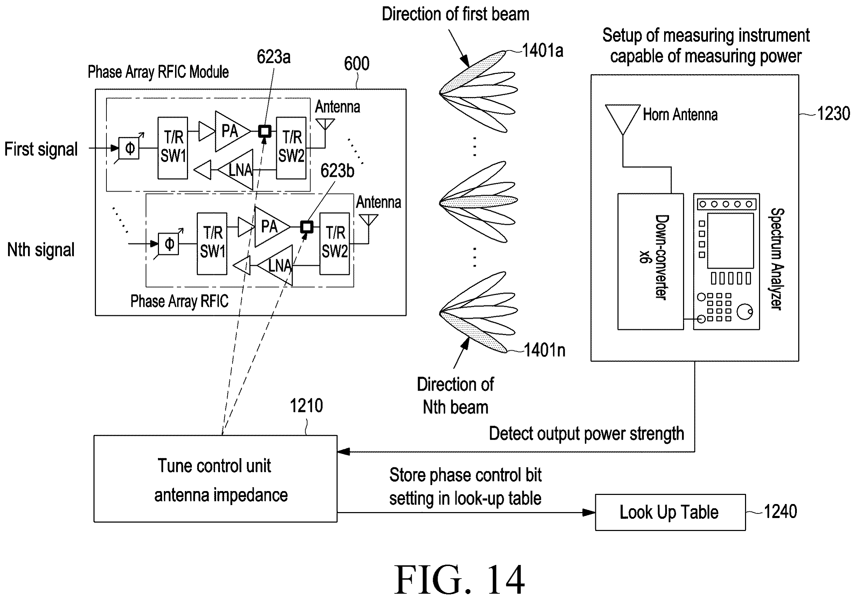

FIG. 14 illustrates an initial calibration process of an RF transmitter according to an embodiment of the disclosure.

The embodiment of FIG. 14 may be an example of an initial calibration process for beams in each direction. For example, FIG. 14 may be an example of an initial calibration process for discovering optimal output power for each beam during beam tilting (or sweeping).

The optimization process for each beam 1401a to 1401n of FIG. 14 may be an extension of the optimization process for the boresight beam of FIG. 12.

Referring to FIG. 14, the RF transmitter (or the control unit 1210 of the RF transmitter) may apply a signal to each path of the phased array RFIC 600 for each beam, and identify output power radiated through the antenna for each state through the measuring instrument 1230.

The RF transmitter (or the control unit 1210) may discover a state having output above a preset reference (e.g., sum of PA Psat power and antenna gain) while tuning (or adjusting) antenna impedance for a signal between the antenna and PA of each path using the OPAO 600, and store the corresponding state in the look-up table 1240 (e.g., store phase control bit settings corresponding to the corresponding state in the look-up table). Accordingly, calibration for discovering initial optimal output power of the phased array RFIC module 600 may be performed for each beam.

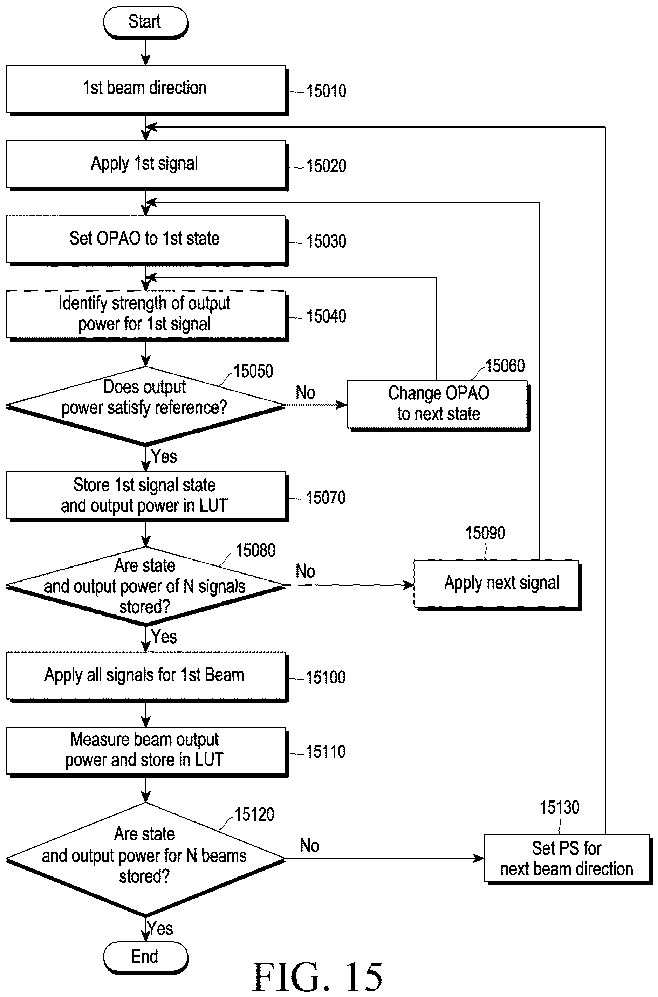

FIG. 15 illustrates a flowchart of a calibration process for each beam according to an embodiment of the disclosure.

The initial calibration process of FIG. 15 may be an example of the initial calibration process of FIG. 14. In the embodiment of FIG. 15, it is assumed that there are N beam directions and N signals are applied to N paths.

Referring to FIG. 15, the RF transmitter (or control unit) may set (or select) a beam in a first direction (first beam) (15010). Hereinafter, operations 15020 to 15130 may be performed for the first beam.

The RF transmitter (or control unit) may apply a first signal for a first path (15020).

The RF transmitter (or control unit) may set a state of the OPAO for the first signal to a first state (15030).

The RF transmitter (or control unit) may identify strength of output power for the first signal (15040).

The RF transmitter (or control unit) may determine whether the output power satisfies a preset reference (15050).

When the output power does not satisfy the preset reference, the RF transmitter (or control unit) may set the state of the OPAO for the first signal to a next state (second state) of the first state (15060). In this case, operations 15040 to 15050 may be performed again based on the second state.

When the output power satisfies the preset reference, the RF transmitter (or control unit) may store the first state and output power for the first signal in the first state in the look-up table (15070).

The RF transmitter (or control unit) may determine whether states of N signals for the first beam and output power of corresponding signals in corresponding states have been stored in the look-up table (15080). In other words, it may be determined whether states and output power of signals for all paths for the first beam have been stored in the look-up table.

When states of N signals for the first beam and output power of corresponding signals in corresponding states have not been stored in the look-up table, the RF transmitter (or control unit) may apply a next signal to the corresponding path (15090). In this case, operations 15030 to 15080 may be performed for the corresponding signal. Through repetition of this process, operations 15030 to 15080 for each signal for each path may be performed respectively. For example, the RF transmitter (or control unit) may perform operations 15020 to 15080 for second to Nth signals applied to second to Nth paths for the first beam respectively. As described above, each operation for each path may be performed sequentially, but the disclosure is not limited thereto. For example, each operation for each path may be performed simultaneously in parallel.

When states of N signals for the first beam and output power of corresponding signals in corresponding states have been stored in the look-up table, the RF transmitter (or control unit) may apply all signals for the first beam (15100).

The RF transmitter (or control unit) may measure beam output power for the first beam based on all applied signals and store the measured beam output power in the look-up table (15110).

The RF transmitter (or control unit) may determine whether states for N beams (or beam directions) and output power of corresponding signals in corresponding states have been stored in the look-up table (15120). In other words, it may be determined whether states and output power of signals for all paths for all beams have been stored in the look-up table.

When states for N beams and output power of corresponding signals in corresponding states have not been stored in the look-up table, the RF transmitter (or control unit) may perform setting (phase shift setting) for a beam in a next direction (or next beam) (15130). In this case, operations 15020 to 15120 may be performed again for the corresponding beam.

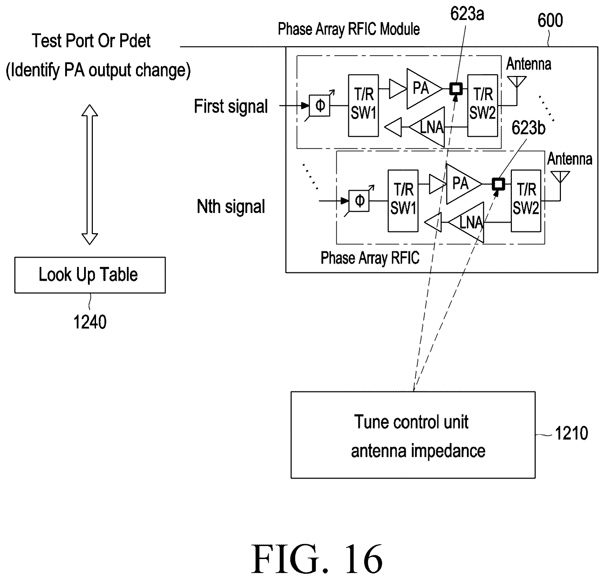

FIG. 16 illustrates a real-time calibration process of an RF transmitter according to an embodiment of the disclosure.

The embodiment of FIG. 16 corresponds to a process for compensating when degradation of output power occurs according to external circumstances in a real-time circumstance, not initial calibration.

Referring to FIG. 16, the RF transmitter (or the control unit 1210 of the RF transmitter) may monitor output power in real-time through a test port and/or Pdet. The RF transmitter (or the control unit 120) may determine whether degradation of output power occurs by comparing the monitored output power with initial optimal output power stored in the look-up table 1240. When degradation of output power occurs, the RF transmitter (or control unit) may compensate for the degradation of output power using the OPAOs 623a to 623n of the phased array RFIC 600.

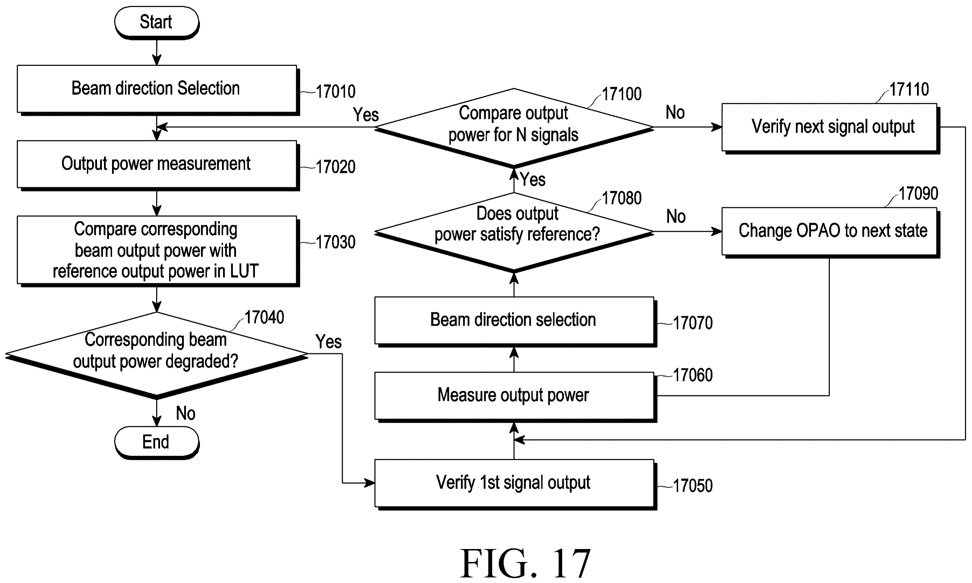

FIG. 17 illustrates a flowchart of a real-time calibration process according to an embodiment of the disclosure.

The real-time calibration process of FIG. 17 may be an example of the initial calibration process of FIG. 16.

Referring to FIG. 17, the RF transmitter (or control unit) may select a beam direction (17010).

The RF transmitter (or control unit) may measure output power in the corresponding beam direction (17020).

The RF transmitter (or control unit) may compare the measured output power for the corresponding beam direction with reference power (optimal power) for the corresponding beam direction stored in the look-up table (17030).

The RF transmitter (or control unit) may determine whether degradation of output power for the corresponding beam direction occurs based on the comparison result (17040).

When degradation of output power occurs, the RF transmitter (or control unit) may initiate verification of output power of a first signal for a first path (17050).

The RF transmitter (or control unit) may measure output power for the first signal (17060).

The RF transmitter (or control unit) may compare the measured output power for the first signal with reference power (optimal power) for the corresponding first signal stored in the look-up table (17070).

Based on the comparison result, the RF transmitter (or control unit) may determine whether output power for the corresponding first signal satisfies a preset reference (17080).

When the output power does not satisfy the preset reference, the RF transmitter (or control unit) may set the state of the OPAO for the first signal to a next state (second state) of the first state (17090). In this case, operations 17060 to 17080 may be performed again based on the second state.

When the output power satisfies the preset reference, the RF transmitter (or control unit) may compare output power for N signals (17100). It may return to 17020. When it is identified based on the comparison result that output power for N signals satisfies the preset reference, operations from 17020 and thereafter may be performed for a beam in a next direction. When it is identified based on the comparison result that output power for N signals does not satisfy the preset reference, output verification for a next signal may be initiated (17110). In this case, operations 17060 to 17100 may be performed again for the next signal.

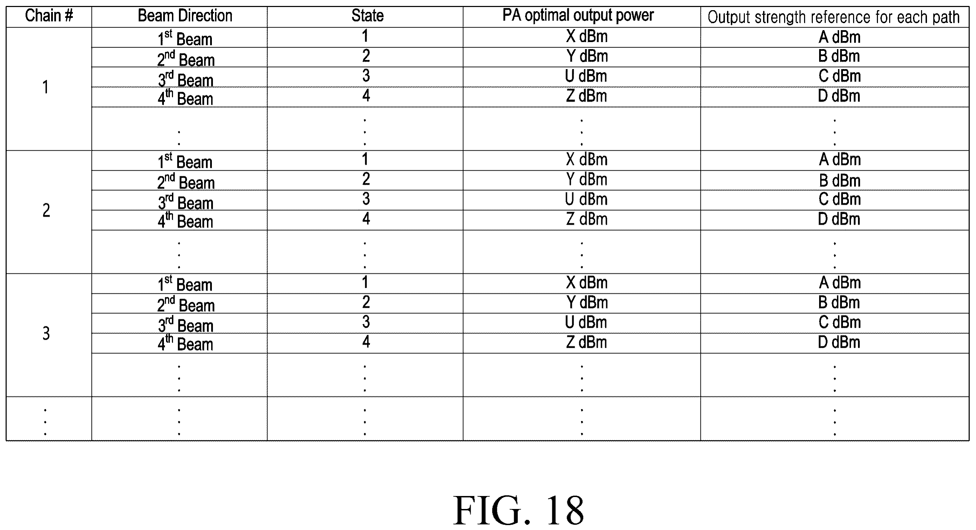

FIG. 18 illustrates a look-up table for an OPAO according to an embodiment of the disclosure.

Referring to FIG. 18, the look-up table may include chain number information, beam direction information, state information, PA optimal output power information, and/or output strength reference information of each path. As an embodiment, values stored in the look-up table may be set through an initial calibration process.

As an example, for chain number #1, a plurality of beam directions may be set, and values of state, PA optimal output power and output strength reference for 1^{st} beam may be 1, X dBm, A dBm respectively, and values of state, PA optimal output power and output strength reference for 2^{nd} beam may be 2, Y dBm, B dBm respectively. As an embodiment, chain number #1 may be associated with antenna #1.

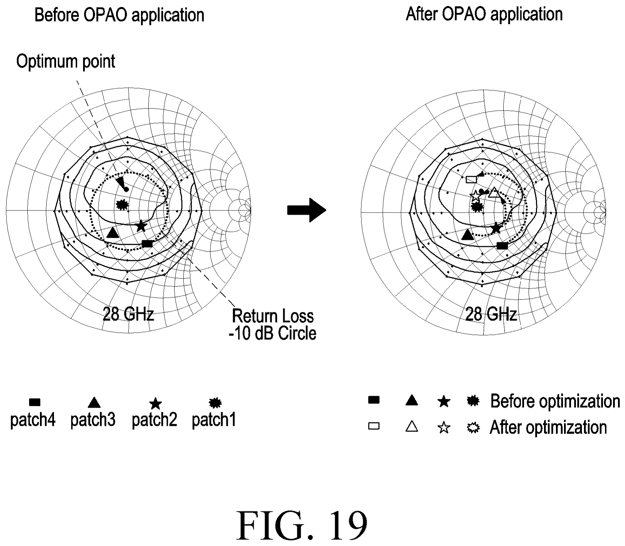

FIG. 19 illustrates changes in antenna impedance points according to OPAO application according to an embodiment of the disclosure.

FIG. 19(a) illustrates antenna impedance points before OPAO is applied, and FIG. 19(b) illustrates antenna impedance points after OPAO is applied.

Referring to FIG. 19(a), among antenna impedance points corresponding to patches 1 to 4, some (e.g., antenna impedance corresponding to patch 1) may be positioned at a point close to the optimal point (optimal output point) of the PA, but most antenna impedance points (e.g., antenna impedances corresponding to patches 2 to 4) may be positioned at points far from the optimal point of the PA. In particular, degradation of output power may occur at patch 4 corresponding to the antenna impedance point farthest from the optimal point.

Referring to FIG. 19(b), as OPAO is applied, antenna impedance points are phase shifted and may be moved to points close to the optimal point of the PA. For example, antenna impedance points corresponding to patches 2 to 4 are phase shifted and may be moved to points close to the PA optimal point. Accordingly, antenna impedance points for all patches including patch 1 are positioned close to the optimal point, allowing the phased array RFIC to output optimal output. This may basically compensate for PA performance in a high frequency band such as sub THz band where degradation characteristics of PA output power exist, while simultaneously increasing power efficiency and antenna radiation efficiency.

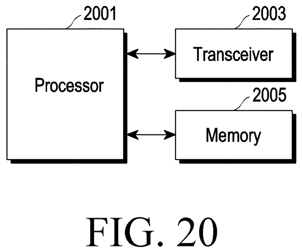

FIG. 20 is a view illustrating a configuration example of an electronic device according to an embodiment of the disclosure.

The electronic device of FIG. 20 may be an electronic device including an RF transmitter and/or an RF receiver. For example, the electronic device of FIG. 20 may be a UE including an RF transmitter and/or an RF receiver. For example, the electronic device of FIG. 20 may be a base station including an RF transmitter and/or an RF receiver.

In FIG. 20, the electronic device may include a processor 2001, a transceiver 2003, and/or memory 2105. The processor 2001, transceiver 2003, and memory 2005 of the electronic device may operate according to the method(s) described in the above-described embodiments of FIGS. 1 to 19. However, the components of the electronic device are not limited to the above-described examples. For example, the electronic device may include more or fewer components than the above-described components. The processor 2001, the transceiver 2003, and the memory 2005 may be implemented in the form of at least one chip.

The transceiver 2003 collectively refers to a receiver and a transmitter and may transmit and receive signals to/from a UE or another network entity. The transmitted/received signals may include at least one of control information and data. To that end, the transceiver 2003 may include an RF transmitter for frequency-up converting and amplifying signals transmitted and an RF receiver for low-noise amplifying signals received and frequency-down converting the frequency of the received signals. This is merely an embodiment of the transceiver 2003, and the components of the transceiver 2003 are not limited to the RF transmitter and the RF receiver. Further, the transceiver 2003 may receive signals through a communication scheme defined in the 3GPP standard, output the signals to the processor 2001, and transmit the signals output from the processor 2001. Further, the transceiver 2003 may receive the signal and output it to the processor 2001 and transmit the signal output from the processor 2001 to another network entity through the network.

The memory 2005 may store programs and data necessary for the operation of the UE according to at least one of the embodiments of FIGS. 1 to 19. The memory 2005 may store control information and/or data that is included in the signal obtained by the UE. The memory 2005 may include a storage medium, such as ROM, RAM, hard disk, CD-ROM, and DVD, or a combination of storage media.

The processor 2001 may control a series of processes so that the UE may operate according to at least one of the embodiments of FIGS. 1 to 19. The processor 2001 may include at least one processor.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. An electronic device in a wireless communication system including a radio frequency (RF) transmitter, comprising:
an RF transmitter; and
a control unit,
wherein the RF transmitter includes:
a power amplifier amplifying power of a signal;
an antenna transmitting the signal; and
an output power adaptive optimizer disposed between the power amplifier and the antenna to adjust antenna input impedance,
wherein the control unit is configured to optimize output power of the power amplifier by adjusting the antenna input impedance using the output power adaptive optimizer.

2. The electronic device of claim 1, wherein the output power adaptive optimizer includes a signal line, a plurality of stubs connectable in parallel to the signal line, and the plurality of switches,
wherein a first end and a second end of the signal line are connected to the power amplifier and the antenna, respectively, and
wherein each of the plurality of switches is disposed between the signal line and a corresponding stub and is used to support parallel connection between the signal line and the corresponding stub.

3. The electronic device of claim 2, wherein the plurality of stubs are open stubs or short stubs.

4. The electronic device of claim 2, wherein the control unit is configured to adjust the antenna input impedance by controlling the plurality of switches to adjust a number of stubs connected in parallel to the signal line.

5. The electronic device of claim 1, wherein the output power adaptive optimizer includes a signal line, a plurality of stubs connectable in series to the signal line, and the plurality of switches,
wherein a first end and a second end of the signal line are connected to the power amplifier and the antenna, respectively, and
wherein one of the plurality of switches is disposed between the signal line and a first stub of the plurality of stubs, and remaining ones of the plurality of switches are disposed between two stubs and are used to support series connection between the signal line and at least one of the plurality of stubs.

6. The electronic device of claim 5, wherein the plurality of stubs are open stubs.

7. The electronic device of claim 2, wherein the control unit is configured to adjust the antenna input impedance by controlling the plurality of switches to adjust a number of stubs connected in series to the signal line.

8. The electronic device of claim 2 or 5, wherein the plurality of stubs have different lengths from each other.

9. The electronic device of claim 2 or 4, wherein lengths of the plurality of stubs are set to have a length for changing a phase of maximum λ/4, where λ corresponds to a length of a wavelength of an operating frequency.

10. The electronic device of claim 1, wherein the electronic device is a user equipment (UE) or a base station.

11. The electronic device of claim 1, wherein the power amplifier and the output power adaptive optimizer are integrated in a phased-array RFIC, and wherein the antenna is one of antennas included in an array antenna having a predetermined array structure.

12. The electronic device of claim 1, wherein the output power adaptive optimizer of the RF transmitter is configured to use a frequency band of a terahertz (THz) band or a sub terahertz band.

13. The electronic device of claim 1, wherein a configuration of the output power adaptive optimizer is changed according to a number of control bits used in the control unit.

14. The electronic device of claim 1, wherein a number of states associated with a value of phase shift is determined by the output power adaptive optimizer according to a number of control bits used in the control unit.

15. The electronic device of claim 1, wherein the control unit is configured to:
perform initial calibration using a boresight beam or performs initial calibration for beams in each direction; and
store results of the initial calibration in a look-up table, and wherein the look-up table includes, for a corresponding antenna, information on beam direction, information on states associated with values of phase shift, information on optimal output power of the power amplifier, or information on output strength reference of each path.
